Europäisches Patentamt

European Patent Office

Office européen des brevets

(19)

(11) **EP 0 896 273 A1**

(12) **EUROPÄISCHE PATENTANMELDUNG**

(43) Veröffentlichungstag:
10.02.1999 Patentblatt 1999/06

(51) Int. Cl.⁶: **G06F 1/24**

(21) Anmeldenummer: 98113005.7

(22) Anmeldetag: 13.07.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **08.08.1997 DE 19734421**

(71) Anmelder:
**SIEMENS AKTIENGESELLSCHAFT**
**80333 München (DE)**

(72) Erfinder: **Prücklmayer, Stephan**
**80469 München (DE)**

(54) **Schaltung zur Erzeugung eines Rücksetz-Signals**

(57)    Es ist eine Schaltung zur Erzeugung eines Rücksetz-Signals offenbart. Die Schaltung weist einen Spannungsteiler, an dem eine mit der Versorgungsspannung proportionale erste Spannung abgreifbar ist, und eine Tiefpaßanordnung auf. Die Schaltung ist gekennzeichnet durch eine erste und eine zweite bistabile Kippschaltung, die jeweils eines Hysterese aufweisen, und eine Zener-Diode, die in Reihe mit einem ersten Widerstand in Sperr-Richtung zwischen die Versorgungsspannung und Masse geschaltet ist und an der eine zweite Spannung abgreifbar ist. Dabei wird der ersten Kippschaltung das Differenzsignal aus erster und zweiter Spannung zugeführt. Der Tiefpaßanordnung wird das Ausgangssignal der ersten Kippschaltung zugeführt, und der zweiten Kippschaltung wird das Differenzsignal aus dem Ausgangssignal der Tiefpaßanordnung und der zweiten Spannung zugeführt. An der zweiten Kippschaltung ist das Rücksetz-Signal abgreifbar.

FIG 1

EP 0 896 273 A1

**Beschreibung**

Die Erfindung betrifft eine Schaltung zur Erzeugung eines Rücksetz-Signals nach dem Oberbegriff von Patentanspruch 1.

Eine derartige Schaltung ist in jedem elektronischen Gerät erforderlich, das Komponenten aufweist, die digitale Signale verarbeiten können. In diesen Komponenten können beim Übergang vom ausgeschalteten Zustand in den eingeschalteten Zustand des Geräts nicht definierte bzw. unzulässige Zustände auftreten, die vermieden werden sollen. Es ist daher eine Schaltung erforderlich, die während des Anstiegs der Versorgungsspannung auf ihren Nennwert diese Komponenten in einen vordefinierten Zustand führt, von dem aus nach Erreichen des Nennwerts der Versorgungsspannung der Betrieb aufgenommen werden kann.

Typischerweise weisen die in Frage stehenden Komponenten einen Rücksetzanschluß auf, der die betroffene Komponente in einen vordefinierten Zustand führt, wenn an diesen Anschluß ein bestimmter Pegel angelegt wird. Die Komponente befindet sich im normalen Betriebszustand, wenn ein solcher Pegel gerade nicht angelegt ist. Es sind Reset-Schaltungen bekannt, deren Ausgang solange auf dem bestimmten Pegel liegt, bis die Versorgungsspannung ihren Nennwert erreicht hat. Es wird diesbezüglich beispielsweise auf Tietze/Schenk, 7. Auflage, 1985, Kapitel 21.1.1 "Reset-Logik", Seiten 637 bis 639 verwiesen. Eine andere Schaltungsanordnung zur Erzeugung eines Rücksetzsignals ist beispielsweise aus der DE 44 43 606 bekannt.

In der Praxis sind derartige Reset-Schaltungen als separate Komponenten erhältlich. Dies ist jedoch nachteilig, weil eine derartige zusätzliche Komponente entsprechenden Raum auf einer gedruckten Schaltungsplatte einnimmt. Dies behindert das Bestreben nach immer kleineren Baugruppengrößen und höherer Integrationsdichte. Darüberhinaus sollen Reset-Schaltungen auch ein Reset-Signal abgeben, wenn die Versorgungsspannung eine bestimmte Schwelle unterschreitet. Diese Funktion wird als Undervoltage-Detection bezeichnet.

Aus der US 4,727,270 ist ein Impulssensor bekannt geworden, der gegenüber Rauschen immun ist. Der Sensor weist eine Reihenschaltung eines ersten Schmitt-Triggers, eines Tiefpasses und eines zweiten Schmitt-Triggers auf. Das Ausgangssignal des zweiten Schmitt-Triggers wird auf das Eingangssignal des ersten Schmitt-Triggers rückgekoppelt. Die offenbarte Schaltung dient zur Aufnahme und Erstverarbeitung eines Sensorsignals.

Das der Erfindung zugrunde liegende technische Problem besteht daher darin, eine Schaltung anzugeben, die die Erfordernisse einer Rücksetz-Schaltung erfüllt, deren Aufbau jedoch eine Integration in der rückzusetzenden Komponente zuläßt.

Dieses Problem wird gelöst mit einer Schaltung mit den Merkmalen von Patentanspruch 1. Bevorzugte Ausführungsformen dieser Schaltung sind in den Unteransprüchen angegeben.

Eine bevorzugte Schaltung zur Erzeugung eines Rücksetz-Signals nach der Erfindung weist einen Spannungsteiler und eine Tiefpaßanordnung auf. Am Spannungsteiler ist eine Spannung abgreifbar, die proportional zur Versorgungsspannung ist. Durch die Ausgestaltung der Tiefpaßanordnung kann eine Zeitkonstante eingestellt werden. Die Schaltung weist eine erste und eine zweite bistabile Kippschaltung auf, die jeweils mit einer Hysterese behaftet sind. Schließlich weist die Schaltung eine Reihenschaltung aus einem ersten Widerstand und einer Zener-Diode auf, die zwischen den Versorgungsspannungsanschluß und den Masseanschluß geschaltet ist.

Dabei ist die Zener-Diode zwischen diesen Anschlüssen in Sperr-Richtung geschaltet. An dem Verbindungsknoten zwischen dem ersten Widerstand und der Zener-Diode ist eine zweite Spannung abgreifbar. Aus der am Spannungsteiler abgreifbaren ersten Spannung und aus der an der Zener-Diode abgreifbaren zweiten Spannung wird ein Differenzsignal gebildet, das der ersten bistabilen Kippschaltung zugeführt wird. Der Ausgangsanschluß der ersten bistabilen Kippstufe wird der Tiefpaßanordnung zugeführt. Das aus dem Ausgangssignal der Tiefpaßanordnung und der zweiten Spannung gebildete Differenzsignal wird der zweiten Kippschaltung zugeführt, an deren Ausgang das Rücksetz-Signal abgreifbar ist. Wenn am Ausgangsanschluß der zweiten bistabilen Kippschaltung eine logische "0" anliegt, das heißt, der Anschluß liegt in etwa auf dem Massepotential, wird ein Rücksetzen angezeigt. Der besondere Vorteil dieser Schaltung besteht darin, daß die Schaltung auf Grund der Verwendung einer Zener-Diode eine hohe Temperaturstabilität gewährleistet und auf Grund der Schaltungsstruktur dennoch kostengünstig, insbesondere innerhalb einer integrierten Lösung, realisiert werden kann.

In einer bevorzugten Ausführungsform sind die erste und die zweite Kippschaltung als Schmitt-Trigger ausgebildet. Diese sind vorzugsweise aus Komparatoren aufgebaut, an deren Eingängen die jeweiligen Differenzsignale gebildet werden.

Die Tiefpaßanordnung besteht besonders bevorzugt aus einer Reihenschaltung aus einem zweiten Widerstand und einem Kondensator. Diese Reihenschaltung ist zwischen den Versorgungsspannungsanschluß und den Masseanschluß geschaltet. Der zwischen dem zweiten Widerstand und dem Kondensator liegende Knoten ist mit dem Ausgangsanschluß der ersten Kippschaltung und einem Eingangsanschluß der zweiten Kippschaltung verbunden.

Durch entsprechende Dimensionierung des Spannungsteilers kann eine bestimmte Einsetzspannung vorgegeben werden. Die Länge des Rücksetz-Signals kann über die Zeitkonstante des Tiefpasses festgelegt werden. Durch die Wahl der Durchbruchspannung der Zener-Diode wird im wesentlichen die Schaltschwelle festgelegt. Demnach können mit der Schaltung nach der Erfindung die für eine derartige Schaltung relevanten Parameter durch entsprechende Dimensionierung festgelegt werden. Bei entsprechender Dimensionierung gibt die Rücksetz-Schaltung auch während des Betriebs ein Rücksetz-Signal ab, wenn bei der Versorgungsspannung zu große Spannungsschwankungen auftreten.

Weitere Vorteile, Merkmale und Anwendungsmöglichkeiten der vorliegenden Erfindung ergeben sich aus der nachfolgenden Beschreibung eines Ausführungsbeispiels in Verbindung mit der Zeichnung. In der Zeichnung zeigen:

Figur 1       eine Schaltung zur Erzeugung eines Rücksetz-Signals gemäß der Erfindung, und

Figur 2a - 2d   eine schematische Darstellung von Spannungsverläufen beim Einschalten.

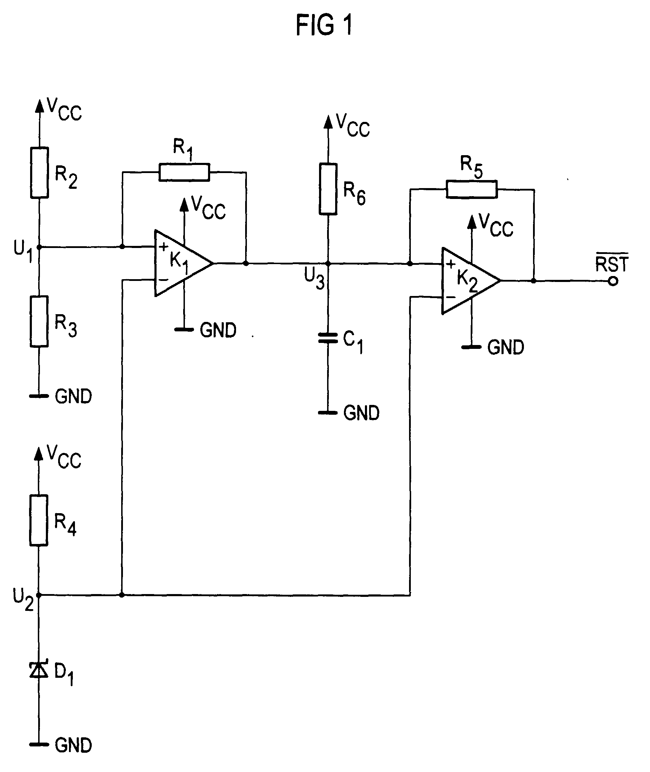

Die Schaltung nach Figur 1 weist eine erste, eine zweite und eine dritte Reihenschaltung auf, die jeweils zwischen dem Versorgungsspannungsanschluß $V_{cc}$ und dem Masseanschluß GND geschaltet sind, wobei die $V_{cc}$ eine gegenüber dem Massepotential positive Spannung ist. Die erste Reihenschaltung besteht aus den Widerständen R2 und R3, die einen Spannungsteiler bilden. An dem Knoten, der die Widerstände R2 und R3 verbindet, liegt eine Spannung $U_1$ an, die der Versorgungsspannung $V_{cc}$ proportional ist.

Die zweite Reihenschaltung besteht aus einem Widerstand R4 und einer Zener-Diode D1. Die Zener-Diode D1 ist dabei gegenüber der Versorgungsspannung $V_{CC}$ in Sperr-Richtung geschaltet. Die Anode der Zener-Diode D1 ist mit dem Masseanschluß verbunden, und die Kathode der Zener-Diode D1 ist mit dem Widerstand R4 verbunden. An der Kathode der Zener-Diode D1 liegt eine Spannung $U_2$ an, die im wesentlichen gleich der Versorgungsspannung $V_{cc}$ ist, solange diese kleiner als die Durchbruchspannung der Zener-Diode D1 ist. Die Spannung $U_2$ verbleibt in etwa auf Höhe der Durchbruchspannung, nachdem die Versorgungsspannung die Durchbruchspannung überschritten hat.

Die dritte Reihenschaltung besteht aus einem Widerstand R6 und einem Kondensator C1. Der Widerstand R6 ist versorgungsspannungsseitig angeschlossen, während der Kondensator C1 masseseitig angeschlossen ist. An dem den Widerstand R6 und den Kondensator C1 verbindenden Knoten liegt eine Spannung $U_3$ an, die im wesentlichen einer Tiefpaßfilterung des Versorgungsspannungsverlaufs entspricht. Durch den Widerstand R6 und den Kondensator C1 wird eine Zeitkonstante bestimmt, die den Verlauf der Antwort auf eine sprunghafte Änderung der Versorgungsspannung darstellt.

Die Schaltung nach Figur 1 weist ferner zwei bistabile Kippschaltungen auf, die im bevorzugten Ausführungsbeispiel als Schmitt-Trigger ausgebildet sind. Der erste Schmitt-Trigger weist einen Komparator K1 auf, dessen Ausgangssignal über einen Widerstand R1 zum positiven Eingang des Komparators K1 mitgekoppelt ist. Der zweite Schmitt-Trigger weist einen Komparator K2 auf, dessen Ausgangssignal über einen Widerstand R5 zum positiven Eingangsanschluß mitgekoppelt ist. Die Mitkopplungsschleifen der Komparatoren bewirken eine Hysterese der Schmitt-Trigger. Die Hysterese-Schaltpegel können durch entsprechende Dimensionierung der Mitkopplungswiderstände R1 bzw. R5 festgelegt werden. Die Komparatoren K1 und K2 werden wie die übrigen Schaltungsteile von der Versorgungsspannung $V_{CC}$ gegenüber Masse GND gespeist. Als Komparatoren werden im bevorzugten Ausführungsbeispiel Operationsverstärker vom allgemein erhältlichen Typ LM393 eingesetzt.

Der Mittenabgriff der ersten Reihenschaltung mit der Spannung $U_1$, das heißt der von $V_{CC}$ geteilten Spannung, ist mit dem positiven Eingang des ersten Komparators K1 verbunden, und der Mittenabgriff der zweiten Reihenschaltung mit der Spannung $U_2$, das heißt der Kathodenanschluß der Zener-Diode D1, ist mit dem negativen Anschluß des ersten Komparators K1 verbunden. Der Ausgangsanschluß des ersten Komparators K1 ist mit dem Mittenabgriff der dritten Reihenschaltung, das heißt dem im wesentlichen tiefpaßgefilterten Versorgungsspannungsverlauf, verbunden.

Am positiven Eingangsanschluß des zweiten Komparators K2 ist der Mittenabgriff der dritten Reihenschaltung angeschlossen, wohingegen am negativen Anschluß des zweiten Komparators K2 der Mittenabgriff der zweiten Reihenschaltung angeschlossen ist. Am Ausgangsanschluß des zweiten Komparators K2 kann das invertierte Rücksetz-Signal $\overline{RST}$ abgegriffen werden.

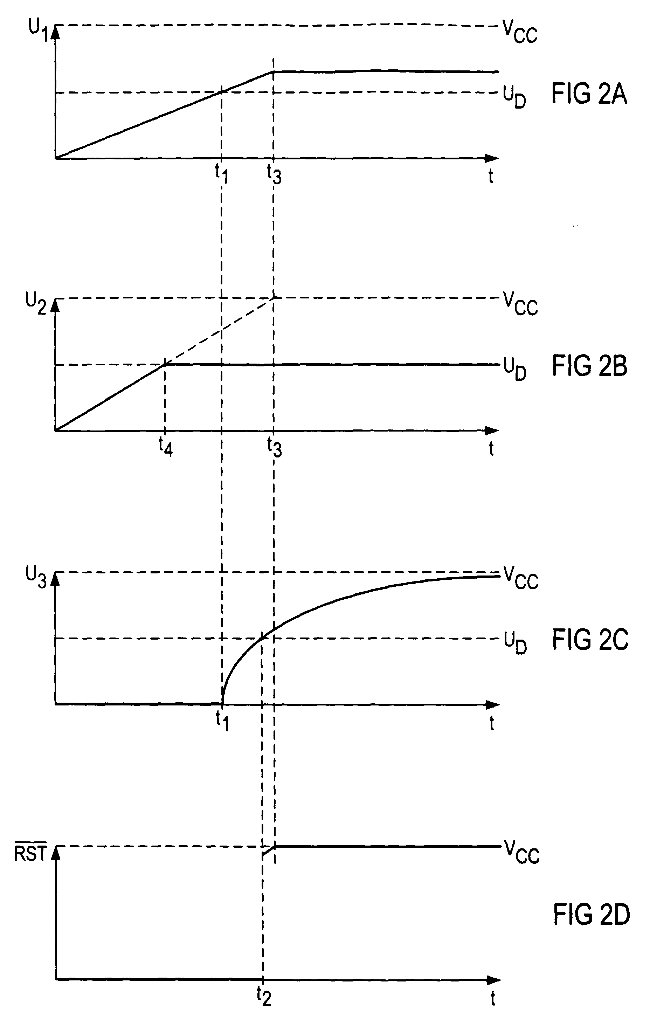

Anhand der Figuren 2a bis 2d wird das Funktionsprinzip der Schaltung erläutert.

Figur 2a zeigt den Verlauf der Spannung $U_1$, wie er am Verbindungsknoten der ersten Reihenschaltung abgreifbar ist. In erster Näherung wird angenommen, der Anstieg der Versorgungsspannung von 0 V auf den Nennwert $V_{CC}$ zum Zeitpunkt $t_3$ erfolge linear. Demnach steigt auch die Spannung $U_1$ bis zum Zeitpunkt $t_3$ linear an und verbleibt dann konstant auf der Höhe der durch die Widerstände R2 und R3 geteilten Versorgungsspannung $V_{cc}$.

Figur 2b zeigt den Verlauf der Spannung $U_2$ am Verbindungsknoten der zweiten Reihenschaltung. Bis zum Zeitpunkt $t_4$ steigt $U_2$ genau mit der Versorgungsspannung an. Zum Zeitpunkt $t_4$ erreicht die an der Zener-Diode $D_1$ anliegende Spannung die Durchbruchspannung $U_D$, so daß die Spannung $U_2$ bei weiter ansteigender Versorgungsspannung $V_{CC}$ in etwa auf dem Wert der Durchbruchspannung $U_D$ verbleibt. Solange die Spannung $U_1$ kleiner als die Spannung $U_2$ ist, liegt das Ausgangspotential des Komparators K1 auf Massepotential GND. Wenn die Spannung $U_2$ die Spannung $U_1$ überschreitet, was zum Zeitpunkt $t_1$ der Fall ist, zieht der Komparator K1 sein Ausgangspotential nach oben.

Figur 2c zeigt den Verlauf der Spannung $U_3$ am Verbindungsknoten der dritten Reihenschaltung. Da bis zum Zeitpunkt $t_1$ das Ausgangspotential des Komparators K1 in etwa auf Masse liegt, bleibt bis zu diesem Zeitpunkt die Spannung $U_3$ ebenfalls auf Masse. Nach Umschalten des Komparators K1 kann auch die Spannung U3 ansteigen, was in etwa mit der Zeitkonstanten des Widerstands R6 und des Kondensators C1 erfolgt.

Figur 2d zeigt den Verlauf des Ausgangssignals $\overline{RST}$. Wenn die ab dem Zeitpunkt $t_1$ ansteigende Spannung $U_3$ die nun in etwa auf der Durchbruchspannung $U_D$ liegende Spannung $U_2$ übersteigt, schaltet auch der zweite Komparator K2, und dessen Ausgangspotential springt in etwa auf die Höhe der gerade anliegenden Versorgungsspannung. Diese hat zum Zeitpunkt $t_2$ bereits den Nennwert $V_{CC}$ erreicht oder, wie es in den Figuren 2a bis 2d dargestellt ist, bei denen der Zeitpunkt $t_3$ des Erreichens des Nennwerts der Versorgungsspannung geringfügig nach dem Schaltzeitpunkt $t_2$ des zweiten Komparators K2 fällt, hat den Nennwert der Versorgungsspannung $V_{CC}$ innerhalb der erforderlichen Grenzen erreicht.

Es sei darauf hingewiesen, daß in den Figuren 2a bis 2d die Schalthysteresen der Komparatoren K1 und K2 nicht berücksichtigt sind. Ebenso sind die dargestellten Signalverläufe rein schematischer Natur, und die in den Figuren 2a bis 2d dargestellten Zeitpunkte $t_1$ bis $t_4$ hängen stark von der Dimensionierung der eingesetzten Bauelemente ab.

Die Schaltung gewährleistet ein korrektes Starten von integrierten Schaltungen mit interner Logik. Die Schaltung ermöglicht darüber hinaus das Auslösen eines Rücksetzens während des Betriebs, wenn zu starke Spannungsschwankungen auftreten. Die beispielhafte Schaltung gewährleistet eine Hysterese, die notwendig ist, um Fehlfunktionen im Bereich der Schaltschwelle vorzubeugen. Die Schaltschwelle beträgt bei einer Versorgungsspannung $V_{CC}$ von 5 V etwa 4,2 V und bei einer Versorgungsspannung $V_{CC}$ von 3,3 V etwa 2,8 V.

Die bisher in Verbindung mit integrierten Schaltungen verwendeten Reset-Generator-Bausteine können durch Integration der Schaltung nach der Erfindung in eine rückzusetzende Schaltung wegfallen, was zu einer erheblichen Kostenreduzierung führt. Die Schalthysterese kann durch die Dimensionierung der Widerstände R1 und R5 festgelegt werden, und die Länge des Rücksetzsignals kann über die Dimensionierung des Kondensators C1 und des Widerstands R6 festgelegt werden. Die Einsetzspannung der Rücksetz-Schaltung wird durch die Dimensionierung der Spannungsteilerwiderstände R2 und R3 und durch die Dimensionierung der Durchbruchspannung $U_D$ der Zener-Diode D1 festgelegt. Bei einer Versorgungsspannung $V_{cc}$ von 5 V, unter Verwendung von Operationsverstärkern vom Typ LM 393 als Komparatoren, einer Zener-Diode mit einer Durchbruchspannung $U_D$ von 2,7 V und den Dimensionierungen R1 = 500 kΩ, R2 = 18 kΩ, R3 = 22 kΩ, R4 = 1 kΩ, R5 = 47 kΩ, R6 = 10 kΩ und C1 = 15 μF kann eine Schalthysterese zwischen 4,1 V und 4,5 V und eine Rücksetz-Zeit von 100 ms erzielt werden.

**Patentansprüche**

1. Schaltung zur Erzeugung eines Rücksetz-Signals mit einem Spannungsteiler (R2, R3), an dem eine mit der Versorgungsspannung ($V_{CC}$) proportionale erste Spannung (U1) abgreifbar ist, und einer Tiefpaßanordnung (R6, C1), gekennzeichnet durch einen ersten (K1, R1) und einen zweiten (K2, R5) Schmitt-Trigger und eine Zener-Diode (D1), die in Reihe mit einem ersten Widerstand (R4) in Sperrrichtung zwischen die Versorgungsspannung ($V_{CC}$) und Masse (GND) geschaltet ist und an der eine zweite Spannung (U2) abgreifbar ist, wobei der erste Schmitt-Trigger (K1, R1) einen Komparator (K1) aufweist, dessen positivem Eingang die erste Spannung (U1) und dessen negativem Eingang die zweite Spannung (U2) zugeführt ist, der Tiefpaßanordnung (R6, C1) das Ausgangssignal (U3) des ersten Schmitt-Triggers (K1, R1) zugeführt ist, der zweite Schmitt-Trigger(K2, R5) einen Komparator aufweist, dessen positivem Eingang das Ausgangssignal der Tiefpaßanordnung (R6, C1) und dessen negativem Eingang die zweite Spannung (U2) zugeführt ist, und am zweiten Schmitt-Trigger (K2, R5) das Rücksetz-Signal ($\overline{RST}$) abgreifbar ist.

2. Schaltung nach Patentanspruch 1, **dadurch gekennzeichnet**, daß die Tiefpaßanordnung eine Reihenschaltung aus einem zweiten Widerstand (R6) und einem Kondensator (C1) aufweist, die zwischen die Versorgungsspannung ($V_{CC}$) und Masse (GND) geschaltet ist, wobei der den zweiten Widerstand (R6) und den Kondensator (C1) verbindende Knoten mit dem Ausgangsanschluß der ersten Kippschaltung (K1, R1) und einem Eingangsanschluß der zweiten Kippschaltung (K6, R5) verbunden ist.

# FIG 1

FIG 2A

FIG 2B

FIG 2C

FIG 2D

Europäisches
Patentamt

**EUROPÄISCHER RECHERCHENBERICHT**

Nummer der Anmeldung

EP 98 11 3005

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 467 504 A (IBM) 22. Januar 1992<br>* Spalte 5, Zeile 52 - Spalte 7, Zeile 8; Abbildung 4 *<br>--- | 1,2 | G06F1/24 |
| A | PATENT ABSTRACTS OF JAPAN<br>vol. 013, no. 459 (E-832),<br>17. Oktober 1989<br>& JP 01 177830 A (MITSUMI ELECTRIC CO LTD), 14. Juli 1989<br>* Zusammenfassung *<br>----- | 1,2 | |

**RECHERCHIERTE SACHGEBIETE (Int.Cl.6)**

G06F

Der vorliegende Recherchenbericht wurde für alle Patentansprüche erstellt

| Recherchenort | Abschlußdatum der Recherche | Prüfer |
|---|---|---|
| DEN HAAG | 13. November 1998 | Ciarelli, N |